# EUROPÄISCHE PATENTSCHRIFT

(11) **EP 1 052 031 B1**
(45) Veröffentlichungstag und Bekanntmachung des Hinweises auf die Patenterteilung: **11.01.2006**
(21) Anmeldenummer: 00108824.4
(22) Anmeldetag: 26.04.2000
(51) Int. Cl.: B07C 5/36, B65G 47/64

(54) **Rotierende Sortiervorrichtung**
Rotating sorting apparatus
Dispositif rotatif de tri

(30) Priorität: 08.05.1999 DE 29908272 U
(43) Veröffentlichungstag der Anmeldung: 15.11.2000
(73) Patentinhaber: psb GmbH Materialfluss + Logistik, 66955 Pirmasens (DE)
(72) Erfinder: Linge, NielsDipl.Ing., 76135 Karlsruhe (DE); Klein, Robert, 66955 Pirmasens (DE); Kölsch, Ernst, 66957 Vinningen (DE); Müller, Martin, 66957 Vinningen (DE); Dietzel, Michael, 66955 Pirmasens (DE)
(74) Vertreter: Patentanwälte Möll und Bitterich

(56) Entgegenhaltungen:
- WO-A-99/12834
- US-A- 1 753 036
- US-A- 5 284 252

## Beschreibung

Die Erfindung betrifft rotierende Sortiervorrichtungen zum Sortieren von Stückgütern.

Die Mehrzahl der handelsüblichen, kontinuierlich rotierenden Sortiervorrichtungen ist in Form eines Ovals aufgebaut. Die Sortiergutaufnahmen, beispielsweise Querbänder, Taschen oder Schalen, laufen in Form einer endlosen Kette um. Das Sortiergut wird auf das Oval schräg von der Seite her aufgegeben. Beim Passieren der gewünschten Abgabestelle wird das Sortiergut ausgeschleust, indem der Transportbewegung eine Horizontal- oder Vertikalbewegung überlagert wird.

Ebenfalls bekannt jedoch weniger gebräuchlich sind Sortiervorrichtungen, bei denen das Sortiergut im Kreis um eine zentrale Achse geführt wird.

Für das Ausschleusen des Sortiergutes aus der Sortiervorrichtung sind unterschiedliche Einrichtungen bekannt. Es gibt Sortiervorrichtungen, bei denen das Ausschleusen mit Hilfe von stationär angeordneten Abweisern vorgenommen wird, die in den Laufweg des Sortierguts eingeschwenkt werden. Andere Sortiervorrichtungen verwenden mitlaufende Ausschleusvorrichtungen. Befindet sich das Fördergut beispielsweise in Taschen oder Schalen, werden diese an der Übergabestelle gekippt, angehoben oder abgesenkt.

Um diese mitlaufenden Ausschleusvorrichtungen, auf die sich auch die vorliegende Erfindung bezieht, betätigen zu können, müssen sie mit Energie und mit Steuersignalen versorgt werden. Vorrichtungen mit Schleifkontakten sind zwar preiswert, jedoch stör-und insbesondere verschleißanfällig. Induktive Übertragungen sind zwar verschleißfrei, jedoch nicht störungsfrei und vor allem teuer.

In der Regel ist die Anzahl der Ausschleusvorrichtungen gleich der Anzahl der Abnahmestellen bzw. der Anzahl der Sortiergutaufnahmen.

Schließlich ist zu bedenken, dass die Sortierleistung der bekannten Vorrichtungen beschränkt ist. Jedes Sortiergut findet im Schnitt erst nach einer halben Umdrehung der Sortiervorrichtung seine Abnahmestelle. Eine Erhöhung der Sortierleistung durch Aufgabe von Sortiergut an mehreren Stellen ist zwar möglich, wird aber aus Steuerungs- und Konstruktionsgründen nur selten realisiert.

Ein weiterer, wesentlicher Nachteil der bekannten kontinuierlich rotierenden Sortiervorrichtungen ist, daß die Zahl der Sortiergutaufnahmen gleich oder größer der Zahl der Endstellen ist. Insbesondere bei aufwändigen und teuren Sortiergutaufnahmen ist dies unwirtschaftlich.

Außer den zuvor beschriebenen Sortiervorrichtungen, bei denen das Sortierorgan kontinuierlich umläuft, gibt es Sortiervorrichtungen, bei denen das Sortierorgan nur nach rechts und links und/oder nach oben und unten geschwenkt wird. Man vergleiche z. B. US 1,753,036 oder WO 99/12834. Diese bekannten Vorrichtungen arbeiten relativ langsam, weil der Abförderer ständig abgebremst und wieder beschleunigt werden muss. Außerdem besteht die Gefahr, dass bei schnellen Richtungsänderungen das Fördergut vom Abförderer herunterfällt. Derartige Sortiervorrichtungen benötigen einen komplizierten und aufwändigen Antrieb, eine aufwändige Positioniervorrichtung, eine aufwändige, verschleißanfällige Mechanik und einen hohen Energieverbrauch. Eine Erhöhung der Zahl der Abförderer zur Erhöhung der Sortierkapazität ist nicht möglich.

Der vorliegenden Erfindung liegt die Aufgabe zugrunde, eine rotierende Sortiervonichtung anzugeben, die mit einer einfachen Mechanik auskommt und die Verwendung von einfachen, preiswerten und zuverlässigen Übertragungsvorrichtungen für Energie und Steuersignale ermöglicht.

Diese Aufgabe wird gelöst.durch eine Vorrichtung mit den Merkmalen des Anspruchs 1.

In der Grundversion besteht die erfindungsgemäße Sortiervorrichtung aus einer beliebigen Vielzahl von Abnahmestellen, die im Kreis um eine zentrale Achse angeordnet sind, einem stationär angeordneten linearen Zuförderer und einem kontinuierlich um die zentrale Achse rotierenden linearen Abförderer. Als Zuförderer und Abförderer eignen sich Bandförderer, Rollenbahnen, Rutschen oder dergleichen. Da der Abförderer um eine zentrale Achse rotiert, erfolgt von dieser Stelle aus die Energie- und Signalübertragung. Die rotierende Konstruktion kann sehr einfach und dauerhaft gehalten werden.

Ein weiterer Vorteil ist, dass nicht an jeder Abnahmestelle eine Ausschleusvorrichtung vorgesehen werden muss. Es genügt vielmehr, den Vorschub des Abförderers gesteuert zu starten und zu stoppen.

Gemäß einer vorteilhaften Ausgestaltung der Erfindung liegt die Übergabestelle zwischen Zuförderer und Abförderer in der Nähe der Achse, da hier die tangentiale Geschwindigkeitskomponente klein ist. Die Übergabestelle wird so gewählt, dass die Geschwindigkeit, mit der der Abförderer sich unter der Übergabestelle vorbei bewegt, gleich der Transportgeschwindigkeit des Zuförderers ist. Auf diese Weise werden die Sortiergüter optimal übergeben.

Dies gilt insbesondere dann, wenn Zuförderer und Abförderer an der Übergabestelle einen Winkel von ca. 90° einschließen.

Eine besonders problemlose Übergabe lässt sich dadurch realisieren, dass der Abförderer im Bereich der Übergabestelle eine Quemeigung erhält, die an die Steigung des Endes des Zuförderers angepasst ist.

Das Ende des Zuförderers kann als Rutsche ausgebildet sein.

Gemäß einer Weiterbildung der Erfindung sind die Längsachsen der Abförderer gegen die Rotationsrichtung aus der Radialen verschwenkt. Der Vorteil dieser Anordnung liegt darin, daß die Überlagerung von tangentialer und radialer Bewegung des Sortierguts auf dem rotierenden Abförderer eine rein radiale Bewegung des Sortierguts an der Abnahmestelle zur Folge hat. Das Sortiergut kann daher auch bei großer Drehgeschwindigkeit seine Abnahmestelle nicht verfehlen.

Der gleiche Effekt lässt sich auch dadurch erreichen, dass die Transportbahn der Abförderer gekrümmt ausgebildet wird.

Zur Erhöhung der Sortierleistung kann gemäß einer Weiterbildung der Erfindung eine Mehrzahl von Abförderern vorgesehen werden. Diese rotieren dann wie die Speichen eines Rades um die zentrale Achse und werden von der Achse aus mit Energie und Steuersignalen versorgt.

Eine Vermehrung der Abnahmestellen kann dadurch erreicht werden, dass diese in mehreren konzentrischen Kreisen um die zentrale Achse herum angeordnet sind. In diesem Fall werden die Abförderer unterschiedlich lang, teleskopierbar und/oder linear verfahrbar ausgebildet.

Gemäß einer Weiterbildung der Erfindung sind die Abnahmestellen in unterschiedlichen Höhen angeordnet. Die Abförderer sind dann mit unterschiedlichen Steigungen ausgeführt.

Alternativ kann die Steigung der Zu- und/oder Abförderer auch gesteuert veränderbar sein.

Gemäß einer Ausgestaltung der Erfindung sind die Zu- und/oder Abförderer als Bandförderer realisiert. Altemative Ausführungsformen sind Rollenbahnen oder auch Rutschen.

Gemäß einer vorteilhaften Weiterbildung der Erfindung enthält ein Abförderer wenigstens einen Teilförderer, wobei dieser selbständig drehbar, heb- und senkbar, kippbar und/oder verschiebbar ist. Mit Hilfe eines derartigen Teilförderers können die Sortiergüter durch Heben, Senken, Drehen usw. in jede für die Weiterbearbeitung optimale Position gebracht werden.

Insbesondere kann gemäß einer Weiterbildung der Erfindung jedem Teilförderer eine eigene Abnahmestelle zugeordnet werden.

Gemäß einer Ausgestaltung der Erfindung rotieren die Abnahmestellen gesteuert um die zentrale Achse. Durch geeignete Wahl von Drehrichtung und Drehgeschwindigkeit kann die Übergabe vom Abförderer zu einer bestimmten Abnahmestelle je nach Bedarf beschleunigt oder verlangsamt werden.

Gemäß einer Weiterbildung hierzu stehen die Abnahmestellen auf einer ringförmigen Förderbahn. Dank dieser Maßnahme ist es möglich, als Abnahmestellen gewöhnliche Kisten oder Kartons zu verwenden.

Gemäß einer alternativen Ausführungsform hierzu sind die Abnahmestellen selbst als ringförmige, gegebenenfalls konzentrische Förderbahnen ausgeführt.

Gemäß einer Weiterbildung der Erfindung ist der rotierenden Sortiervorrichtung wenigstens eine tangentiale Förderbahn zugeordnet. Diese ermöglicht das Heranbringen von Sortiergütern an die erfindungsgemäße Vorrichtung ebenso wie das Abführen der sortierten Güter.

Gemäß einer bevorzugten Weiterbildung der Erfindung sind zwei oder auch mehr Sortiervorrichtungen vorgesehen, wobei wenigstens eine der Abnahmestellen, gebildet durch eine Rutsche, einen Bandförderer oder einen Rollenförderer, der einen Sortiervorrichtung die Sortiergüter auf einen Zuförderer der anderen Sortiervorrichtung übergibt. Durch eine solche Kopplung mehrerer Sortiervorrichtungen lassen sich die Anzahl der Abnahmestellen und die Sortierleistung noch deutlich steigem.

Die Sortiervorrichtungen können je nach dem zur Verfügung stehenden Platz nebeneinander oder auch übereinander stehen.

Um den korrekten Transport der Sortiergüter durch die Anlage überwachen und steuern zu können, können an den Zuförderern, den Abförderern und/oder den Abnahmestellen geeignete Sensoren angebracht sein.

Anhand der Zeichnung soll die Erfindung in Form von Ausführungsbeispielen näher erläutert werden. Es zeigen jeweils rein schematisch
- Fig. 1: eine Draufsicht auf eine erste rotierende Sortiervorrichtung,
- Fig. 2: eine Seitenansicht der Sortiervorrichtung in Fig. 1,
- Fig. 3: eine Draufsicht auf eine zweite rotierende Sortiervorrichtung,
- Fig. 4: eine Draufsicht auf eine aus zwei nebeneinander stehenden Sortiervorrichtungen gebildete Sortieranlage,
- Fig. 5: eine Seitenansicht einer aus zwei übereinander stehenden Sortiervorrichtungen gebildeten Sortieranlage,
- Fig. 6: eine Draufsicht auf eine dritte rotierende Sortiervorrichtung,
- Fig. 7: eine rein schematische Seitenansicht eines Abförderers der Sortiervorrichtung in Fig. 6,
- Fig. 8: eine rein schematische Seitenansicht zweier Abförderer der Sortiervorrichtung in Fig. 6,
- Fig. 9: eine Draufsicht auf eine vierte rotierende Sortiervorrichtung,
- Fig. 10: eine Draufsicht auf eine fünfte rotierende Sortiervorrichtung,
- Fig. 11: eine Draufsicht auf eine sechste rotierende Sortiervorrichtung,
- Fig. 12: rein schematisch eine Seitenansicht eines Zuförderers und eines Abförderers,
- Fig. 13: rein schematisch eine Seitenansicht zweier Abförderer mit verstellbarer Steigung,
- Fig. 14: rein schematisch eine Seitenansicht zweier Abförderer mit veränderbarer Länge bzw. Höhe,
- Fig. 15: rein schematisch eine Seitenansicht zweier Abförderer in Verbindung mit einer Mehrzahl von Abnahmestellen,
- Fig. 16: eine Draufsicht auf eine siebte rotierende Sortiervorrichtung, bei der Zuförderer und Abförderer fluchten,
- Fig. 17: rein schematisch eine Seitenansicht der Sortiervorrichtung in Fig. 16,
- Fig. 18: rein schematisch eine Seitenansicht von Zuförderer und Abförderer, ausgebildet als Rutschen, und
- Fig. 19: rein schematisch eine Seitenansicht eines Abförderers mit einer als Rutsche ausgebildeten Abnahmestelle.

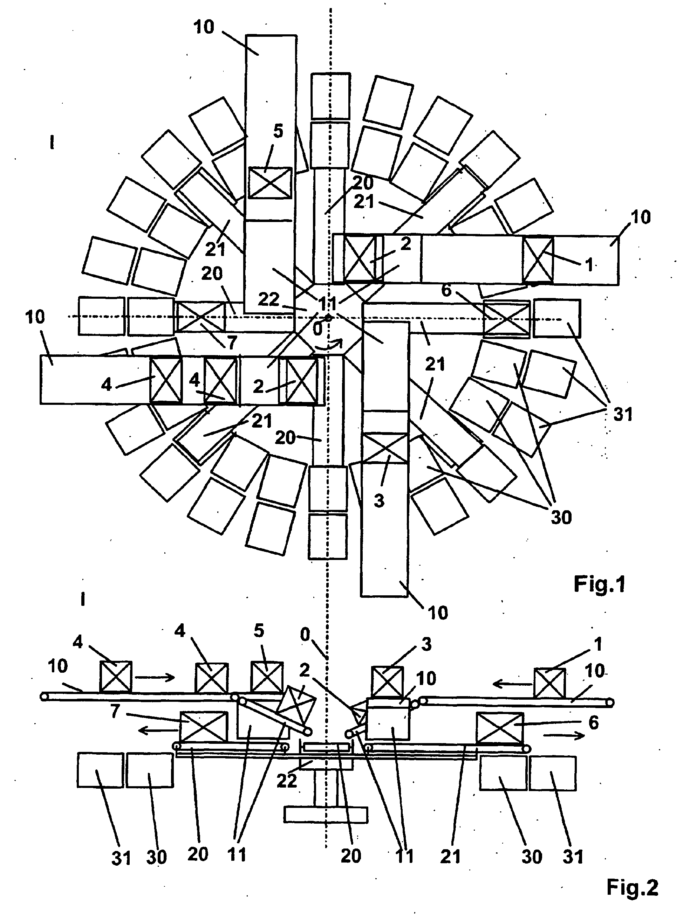

Fig. 1 als Draufsicht und Fig. 2 als Seitenansicht zeigen eine erste rotierende Sortiervorrichtung I. Man erkennt in zwei konzentrischen Kreisen angeordnete Abnahmestellen 30, 31, die um eine zentrale Achse 0 herum angeordnet sind. Zwischen der zentralen Achse 0 und den Abnahmestellen 30, 31 sind wie die Speichen eines Rades Abförderer 20, 21 angeordnet. Die Abförderer 20, 21 sitzen auf einer Nabe 22, die kontinuierlich um die zentrale Achse 0 rotiert, im vorliegenden Fall gegen den Uhrzeigersinn. Um die beiden konzentrischen Kreise von Abnahmestellen 30, 31 bedienen zu können, wechseln sich kurze Abförderer 20 und lange Abförderer 21 ab.

In einer Ebene über den Abförderern 20, 21 sind vier lineare Zuförderer 10 angeordnet. Deren Enden 11 senken sich von der Ebene der Zuförderer 10 zur Ebene der Abförderer 20, 21 ab. An der Übergabestelle schließen Zuförderer 10,11 und Abförderer 20, 21 etwa einen rechten Winkel ein. Die Übergabestellen selbst liegen in Nähe der zentralen Achse 0. Der genaue Ort der Übergabestelle wird zweckmäßigerweise so gewählt, dass die Geschwindigkeit, mit der die Abförderer 20, 21 sich unter der Übergabestelle hindurchbewegen, gleich der Fördergeschwindigkeit der Zuförderer 10, 11 ist

Auf den vier Zuförderern 10, 11 befinden sich Fördergüter 1, 2, 3, 4, 5, wobei das Fördergut 2 die Übergabestelle schon fast erreicht hat. Weitere Fördergüter 6, 7 befinden sich auch auf den Abförderern 20, 21.

Sobald ein Fördergut von einem Zuförderer 10,11 auf einen Abförderer 20, 21 übergeben wurde, wird dieser in Bewegung gesetzt, so dass das Fördergut radial nach außen transportiert wird. Dies ist erforderlich, damit es nicht mit dem Ende 11 des nächstfolgenden Zuförderers 10 kollidiert. Vor Erreichen des Endes wird der Abförderer 20, 21 gestoppt und erst wieder in Bewegung gesetzt, wenn die gewünschte Abnahmestelle 30, 31 erreicht ist Sensoren an den Zuförderern 10, 11, den Abförderern 20, 21 und/oder den Abnahmestellen 30, 31 überwachen und steuern den Transport der Sortiergüter 1, 2, 3, 4, 5, 6, 7.

Die Zahl der Abförderer 20, 21 ist deutlich geringer als die Zahl der Abnahmestellen 30, 31, so dass sich insgesamt eine sehr einfache Mechanik und eine einfache Steueretektronik ergibt

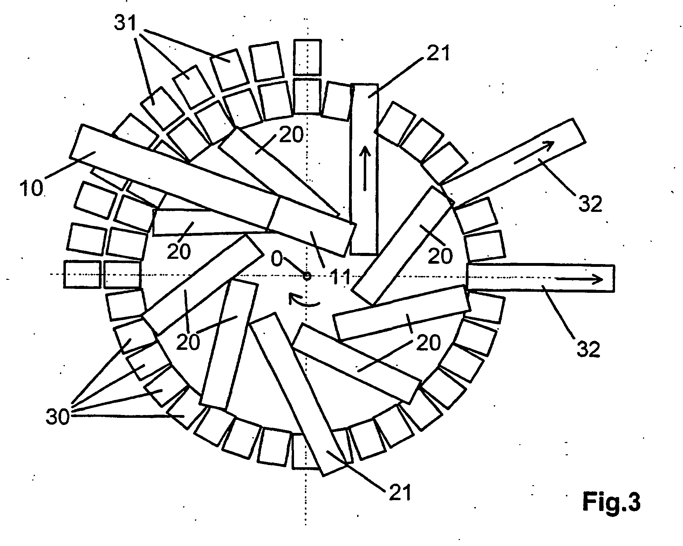

Fig. 3 zeigt eine zweite Ausführungsform der rotierenden Sortiervorrichtung. Hier sind die Längsachsen der Abförderer 20, 21 gegen die Radiale geschwenkt. Auf diese Weise führen die Sortiergüter an den Abnahmestellen 30, 31 eine rein radiale Bewegung aus. Beides erhöht die Funktionssicherheit und Zuverlässigkeit. Einige Abnahmestellen sind als Förderbänder 32 realisiert.

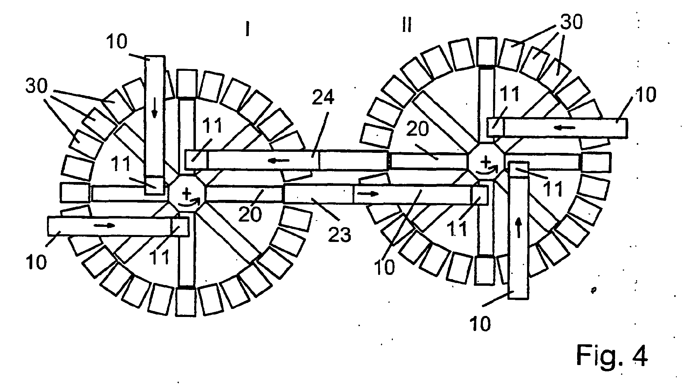

Fig. 4 zeigt eine Draufsicht auf ein aus zwei rotierenden Sortiervorrichtungen I, II gebildete Sortieranlage. Die Abförderer 20 der Sortiervorrichtung I übergeben die Fördergüter direkt auf ein erstes Förderband 23, welches die Fördergüter auf den Zuförderer 10 der Sortiervorrichtung II übergibt. In gleicher Weise übergeben die Abförderer 20 der Sortiervorrichtung II die Fördergüter direkt auf ein zweites Transportband 24, welches die Fördergüter auf einen der Zuförderer 10 der ersten Sortiervorrichtung I übergibt. Durch diese Kopplung zweier rotierender Sortiervorrichtungen I, II lässt sich die Anzahl der Abnahmestellen 30 erhöhen. Soll auch der Durchsatz der Sortieranlage gesteigert werden, so kann dies durch eine Erhöhung der Anzahl der Zuförderer 10, 11 erreicht werden. Dabei dienen die Abförderer 20, 21 auch als Zwischenpuffer.

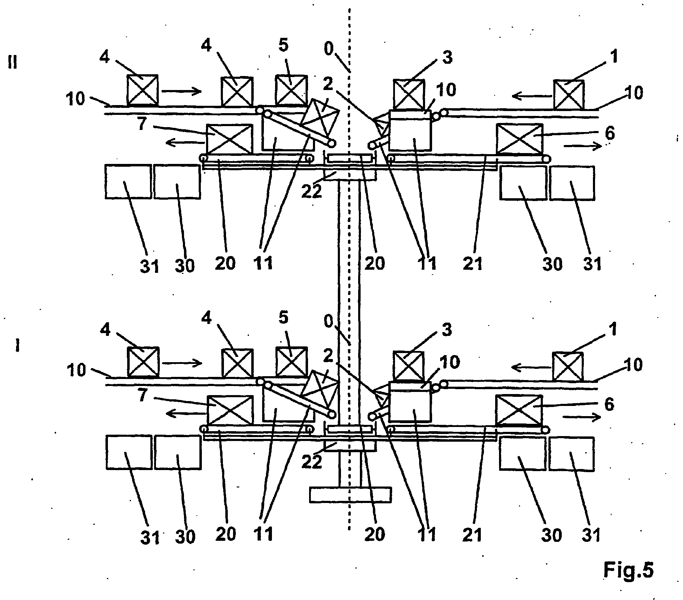

Fig. 5 zeigt eine Sortieranlage, die aus zwei übereinander stehenden rotierenden Sortiervorrichtungen I, II gebildet ist Auch hier werden die Fördergüter mit Hilfe einer Transportvorrichtung, beispielsweise eines Liftsystems, von der einen. Sortiervorrichtung I, II auf die andere Sortiervorrichtung II, I übergeben. Die Enden 11 der Zuförderer 10 sind als Rutsche realisiert.

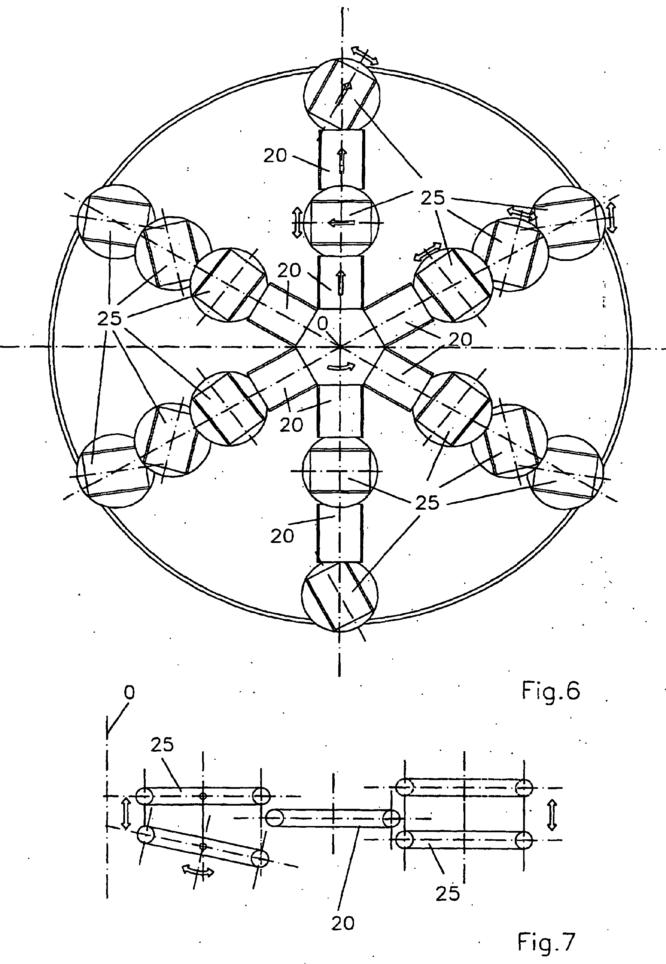

Fig. 6 zeigt eine Draufsicht auf eine dritte rotierende Sortiervorrichtung. Man erkennt sechs um die zentrale Achse 0 herum rotierende Abförderer 20. Jeder Abförderer 20 besitzt zwei oder drei Teilförderer 25, die selbständig drehbar, heb- und senkbar, kippbar und/oder verschiebbar sind. Diese Teilförderer 25 machen es möglich, die Sortiergüter in die für den Weitertransport jeweils optimale Position zu bringen.

Fig. 7 zeigt rein schematisch eine Seitenansicht eines der Abförderer 20 in Fig. 6. Man erkennt zwei Teilförderer 25, von denen der rechte heb- und senkbar, der linke sowohl heb-und senkbar als auch um seine Querachse kippbar ist.

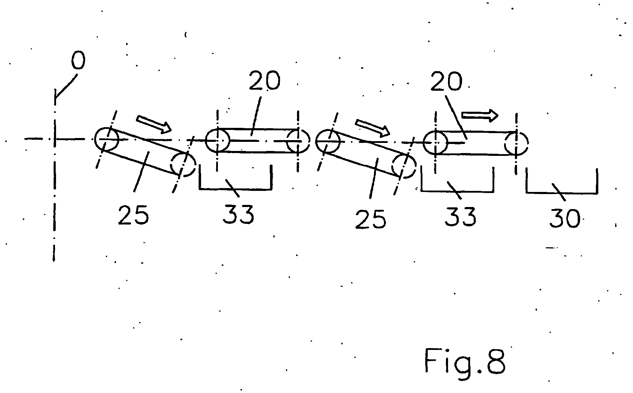

Fig. 8 zeigt rein schematisch einen weiteren Abförderer 20 aus Fig. 6. Man erkennt zwei Teilförderer 25, die aus der Ebene des Abförderers 20 nach unten verschwenkt werden können. Jedem Teilförderer 25 ist eine eigene Abnahmestelle 33 zugeordnet. Durch diese Vermehrung der Abnahmestellen wird die Flexibilität der Sortiervorrichtung weiter erhöht.

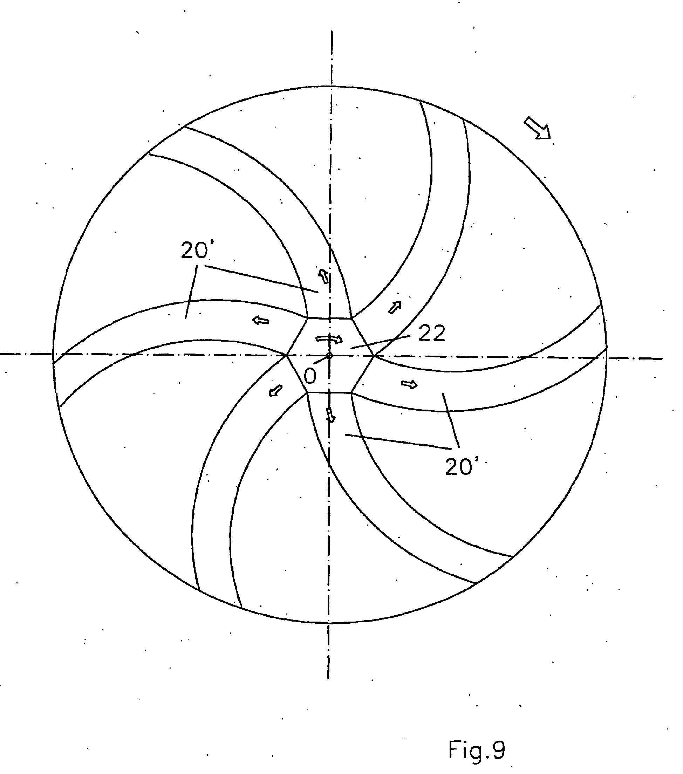

Fig. 9 zeigt rein schematisch eine Draufsicht auf eine vierte rotierende Sortiervorrichtung. Man erkennt sechs kontinuierlich um die zentrale Achse 0 herum rotierende Abförderer 20', deren Transportbahn gekrümmt ist. Durch derartige gekrümmte Transportbahnen lassen sich die radialen und tangentialen Geschwindigkeitsvektoren der Sortiergüter an der Übergabestelle in weiten Grenzen variieren.

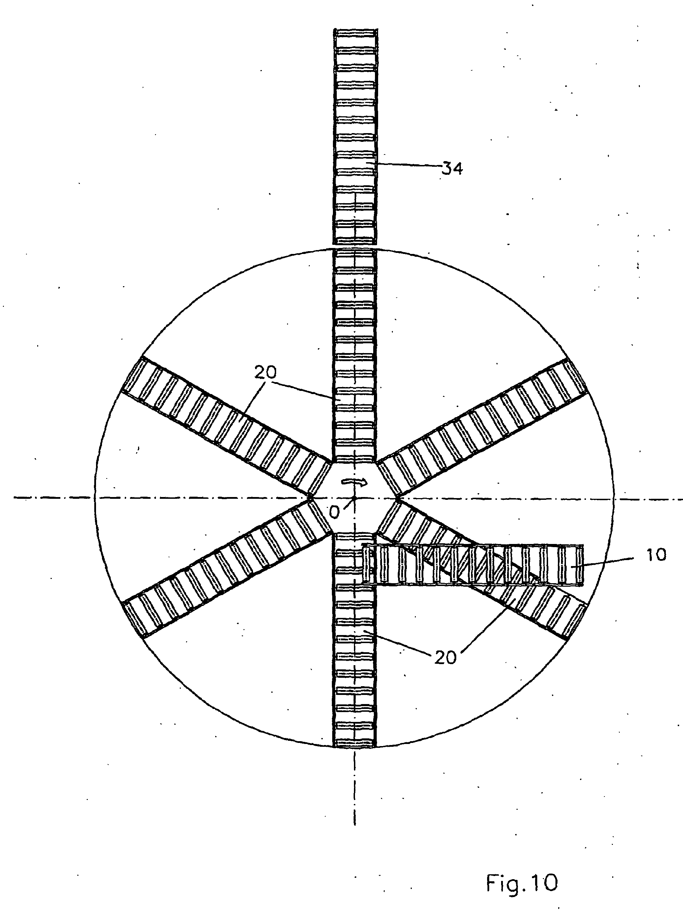

Fig. 10 zeigt rein schematisch eine Draufsicht auf eine fünfte rotierende Sortiervorrichtung. Hier sind sowohl der Zuförderer 10 als auch die Abförderer 20 sowie der Wegförderer 34 als Rollenbahn ausgebildet.

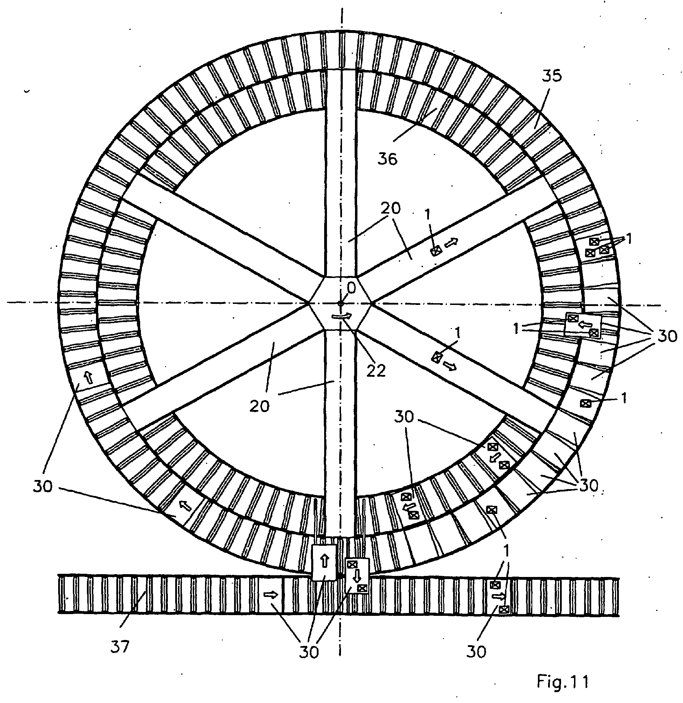

Fig. 11 zeigt rein schematisch eine Draufsicht auf eine sechste rotierende Sortiervorrichtung. Die Zuförderer sind der Einfachheit halber weggelassen. Die Abförderer 20 rotieren kontinuierlich um die zentrale Achse 0. Sie übergeben die Fördergüter 1 auf Abnahmestellen 30, die ihrerseits auf einer als Rollenbahn ausgebildeten ringförmigen Förderbahn 35 stehen und auf dieser Verfahren werden können.

Konzentrisch zur ringförmigen Förderbahn 35 erkennt man eine zweite ringförmige Förderbahn 36. Schließlich erkennt man eine ebenfalls als Rollenbahn ausgebildete tangentiale Förderbahn 37. Dank der Förderbahnen 35, 36, 37 können die Fördergüter 1 der Sortiervorrichtung zugeführt und nach erfolgreicher Sortierung wieder abgeführt werden. Dazu werden die Fördergüter 1 mit Hilfe von handelsüblichen Manipulatoren (nicht dargestellt) zwischen den verschiedenen Förderbahnen 35, 36, 37 und den Zu- und Abförderern 10, 20 umgesetzt.

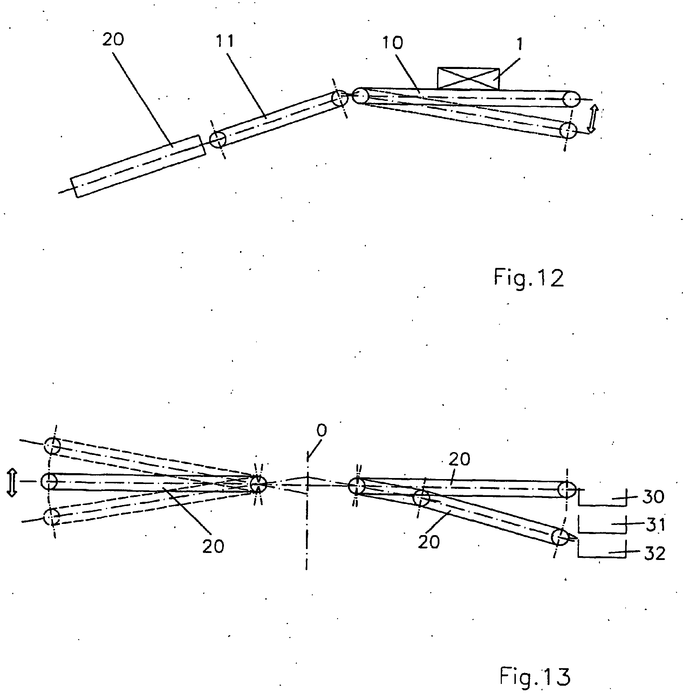

Fig. 12 zeigt rein schematisch die Seitenansicht einer aus Zuförderer 10, 11 und Abförderer 20 bestehenden Teileinheit einer Sortiervorrichtung. Der Zuförderer 10 besitzt eine verstellbare Steigung. Der Abförderer 20 besitzt eine Quemeigung, die der Steigung des Endes 11 des Zuförderers 10 entspricht.

Fig. 13 zeigt ebenfalls rein schematisch eine weitere Teileinheit. Man erkennt zwei um die zentrale Achse 0 rotierende Abförderer 20, deren Steigung gesteuert verändert werden kann. Dadurch ist es möglich, die in drei Ebenen übereinander angeordneten Abnahmestellen 30, 31, 32 gezielt zu bedienen.

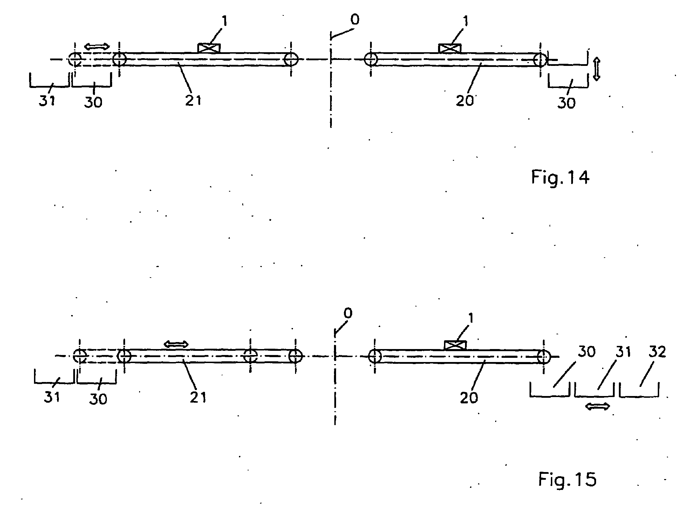

Fig. 14 zeigt rein schematisch die Seitenansicht zweier um die zentrale Achse 0 rotierender Abförderer 20, 21. Dem rechten Abförderer 20 ist eine in der Höhe verstellbare Abnahmestelle 30 zugeordnet. Dem linken Abförderer 21 sind zwei konzentrische Abnahmestellen 30, 31 zugeordnet. Um diese gezielt bedienen zu können, ist die Länge des Abförderers 21 teleskopisch veränderbar.

Fig. 15 zeigt rein schematisch die Seitenansicht zweier weiterer Abförderer 20, 21. Dem rechten Abförderer 20 sind drei konzentrische Abnahmestellen 30, 31, 32 zugeordnet, die radial verschiebbar sind, so dass die Sortiergüter 1 gezielt an eine der Abnahmestellen 30, 31, 32 abgegeben werden können.

Der linke Abförderer 21 dagegen ist radial verfahrbar, so dass auch hier die Sortiergüter gezielt in eine der konzentrischen Abnahmestellen 30, 31 abgegeben werden können.

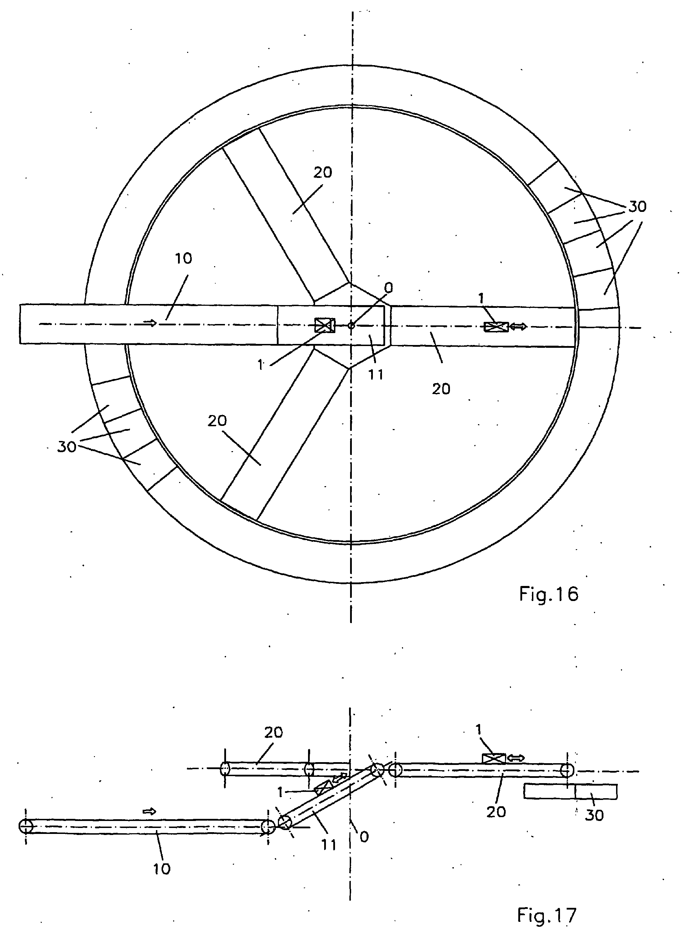

Fig. 16 zeigt eine Draufsicht auf eine siebte Sortiervorrichtung. Diese besitzt drei um die zentrale Achse 0 herum rotierende Abförderer 20, die die Sortiergüter 1 in eine der Abnahmestellen 30 abgeben. Wie sich aus der in Fig. 17 dargestellten Seitenansicht ergibt, ist der Zuförderer 10 in einer Ebene unterhalb der Ebene der Abförderer 20 angeordnet. Das Ende 11 des Zuförderers 10 steigt somit zur Ebene der Abförderer 20 an. Die Übergabe der Sortiergüter 1 erfolgt im Bereich der zentralen Achse 11, sobald die Längsachsen von Zuförderer 10, 11 und Abförderer 20 fluchten.

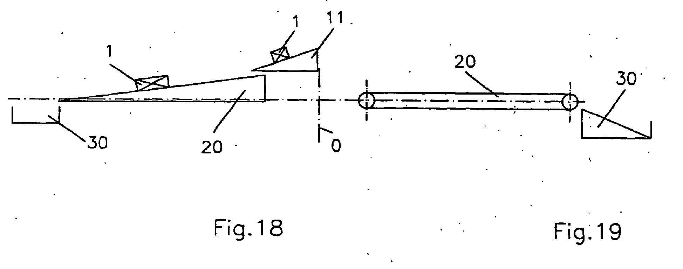

Fig. 18 zeigt rein schematisch eine Seitenansicht von Zuförderer 10, 11, Abförderer 20 und Abnahmestelle 30. Zuförderer 11 und Abförderer 20 sind als Rutschen ausgebildet. Diese Konstruktion zeichnet sich durch eine besondere Einfachheit aus.

Fig. 19 zeigt rein schematisch die Seitenansicht eines Abförderers 20, dem eine als Rutsche ausgebildete Abnahmestelle 30 zugeordnet ist.

## Patentansprüche

1. Rotierende Vorrichtung (I, II) zum Sortieren von Stückgütern (1, 2, 3, 4, 5, 6, 7), umfassend
- eine Mehrzahl von Abnahmestellen (30, 31, 32, 33), die im Kreis um eine zentrale Achse (0) angeordnet sind,
- eine gesteuerte Verteileinrichtung mit wenigstens einem im wesentlichen radial orientierten Abförderer (20, 21; 20') zwischen der Achse (0) und den Abnahmestellen (30, 31, 32, 33),
- der wenigstens eine Abförderer (20, 21; 20') ist kontinuierlich um die Achse (0) rotierbar,
- und wenigstens einen linearen Zuförderer (10), der
- unterhalb oder oberhalb des wenigstens einen Abförderers (20, 21; 20') liegt
- und ein zum Abförderer (20, 21; 20') ansteigendes oder abfallendes Ende (11) besitzt.

2. Vorrichtung nach Anspruch 1, **gekennzeichnet durch** das Merkmal:
- die Übergabestelle zwischen Zuförderer (10, 11) und Abförderer (20, 21; 20') liegt in der Nähe der Achse (0).

3. Vorrichtung nach Anspruch 1 oder 2, **gekennzeichnet durch** das Merkmal:
- der wenigstens eine Zuförderer (10) schließt mit dem wenigstens einen Abförderer (20, 21; 20') an der Übergabestelle einen etwa rechten Winkel ein.

4. Vorrichtung nach Anspruch 1, 2 oder 3, **gekennzeichnet durch** das Merkmal:
- der wenigstens eine Abförderer (20, 21; 20') besitzt im Bereich der Übergabestelle eine Querneigung, die an das Ende (11) des wenigstens einen Zuförderers (10) angepasst ist.

5. Vorrichtung nach einem der Ansprüche 1 bis 4, **gekennzeichnet durch** das Merkmal:
- das Ende (11) des wenigstens einen Zuförderers (10) ist als Rutsche ausgebildet.

6. Vorrichtung nach einem der Ansprüche 1 bis 5, **gekennzeichnet durch** das Merkmal:
- die Längsachse des wenigstens einen Abförderers (20', 21') ist aus der Radialen verschwenkt.

7. Vorrichtung nach einem der Ansprüche 1 bis 6, **gekennzeichnet durch** das Merkmal:
- die Transportbahn des wenigstens einen Abförderers (20') ist gekrümmt.

8. Vorrichtung nach einem der Ansprüche 1 bis 7, **gekennzeichnet durch** das Merkmal:
- es ist eine Mehrzahl von Abförderern (20, 21; 20') vorgesehen.

9. Vorrichtung nach Anspruch 8, **gekennzeichnet durch** die Merkmale:
- die Abnahmestellen (30, 31, 32, 33) sind in konzentrischen Kreisen angeordnet,
- die Abförderer (20, 21; 20') sind unterschiedlich lang.

10. Vorrichtung nach Anspruch 8 oder 9, **gekennzeichnet durch** das Merkmal:
- die Abförderer (20, 21; 20') sind gesteuert teleskopierbar.

11. Vorrichtung nach Anspruch 8 oder 9, **gekennzeichnet durch** das Merkmal:
- die Abförderer (20, 21; 20') sind gesteuert linear verfahrbar.

12. Vorrichtung nach einem der Ansprüche 8 bis 11, **gekennzeichnet durch** die Merkmale:
- die Abnahmestellen (30, 31, 32, 33) sind in unterschiedlichen Höhen angeordnet,
- die Abförderer (20, 21; 20') sind mit unterschiedlichen Steigungen ausgeführt.

13. Vorrichtung nach Anspruch 12, **gekennzeichnet durch** das Merkmal:
- die Steigung der Zu- und/oder Abförderer (10; 20, 21; 20') ist gesteuert veränderbar.

14. Vorrichtung nach einem der Ansprüche 1 bis 13, **gekennzeichnet durch** das Merkmal:
- Zu- und/oder Abförderer (10, 11; 20, 21; 20') sind als Bandförderer realisiert.

15. Vorrichtung nach einem der Ansprüche 1 bis 13, **gekennzeichnet durch** das Merkmal:
- Zu- und/oder Abförderer (10, 11; 20, 21; 20') sind als Rollenbahn realisiert.

16. Vorrichtung nach einem der Ansprüche 1 bis 13, **gekennzeichnet durch** das Merkmal:
- Zu- und/oder Abförderer (10, 11; 20, 21; 20') sind als Rutschen realisiert.

17. Vorrichtung nach einem der Ansprüche 1 bis 16, **gekennzeichnet durch** die Merkmale:
- der wenigstens eine Abförderer (20, 21) enthält wenigstens einen Teilförderer (22),
- der Teilförderer (22) ist selbständig
- drehbar,
- heb- und senkbar,
- kippbar
- und/oder verschiebbar.

18. Vorrichtung nach Anspruch 17, **gekennzeichnet durch** das Merkmal:
- dem Teilförderer (22) ist eine eigene Abnahmestelle (33) zugeordnet.

19. Vorrichtung nach einem der Ansprüche 1 bis 18, **gekennzeichnet durch** das Merkmal:
- die Abnahmestellen (30) rotieren gesteuert um die Achse (0).

20. Vorrichtung nach einem der Ansprüche 1 bis 19, **gekennzeichnet durch** das Merkmal:
- die Abnahmestellen (30) stehen auf einer ringförmigen Förderbahn (35).

21. Vorrichtung nach einem der Ansprüche 1 bis 19, **gekennzeichnet durch** das Merkmal:
- die Abnahmestellen sind als ringförmige, gegebenenfalls konzentrische Förderbahnen (35, 36) ausgeführt.

22. Vorrichtung nach einem der Ansprüche 1 bis 21, **gekennzeichnet durch** das Merkmal:
- es ist wenigstens eine tangentiale Förderbahn (37) vorgesehen.

23. Vorrichtung nach einem der Ansprüche 1 bis 22, **gekennzeichnet durch** die Merkmale:
- es sind wenigstens zwei Sortiervorrichtungen (I, II) vorgesehen,
- wenigstens eine der Abnahmestellen, gebildet **durch** eine Rutsche, einen Bandförderer (23, 24) oder einen Rollenförderer der einen Sortiervorrichtung (I, II) übergibt die Sortiergüter (1, 2, 3, 4, 5, 6, 7) auf wenigstens einen Zuförderer (10, 11) der anderen Sortiervorrichtung (II, I).

24. Vorrichtung nach Anspruch 23, **gekennzeichnet durch** das Merkmal:
- die beiden Sortiervorrichtungen (I, II) stehen nebeneinander oder übereinander.

25. Vorrichtung nach einem der Ansprüche 1 bis 24, **gekennzeichnet durch** das Merkmal:
- Sensoren an den Zuförderern (10, 11), den Abförderern (20, 21; 20') und/oder den Abnahmestellen (30, 31, 32, 33) überwachen und steuern den Transport der Sortiergüter (1, 2, 3, 4, 5, 6, 7).

## Claims

1. A rotating apparatus (I,II) for sorting packaged goods (1,2,3,4,5,6,7), comprising
- a plurality of pick-off points (30,31,32,33) which are arranged in a circle about a central axis (0),
- a controlled distribution device with at least one substantially radially directed discharge conveyor (20,21; 20') between the axis (0) and the pick-off points (30,31, 32,33),
- the at least one discharge conveyor (20,21;20') is rotatable continuously about the axis (0),
- and at least one linear feed conveyor (10) which
- is situated below or above the at least one discharge conveyor (20,21;20')
- and has one end (11) ascending or descending towards the discharge conveyor (20,21;20').

2. An apparatus according to Claim 1, **characterised by** the feature:
- the transfer point between the feed conveyor (10,11) and the discharge conveyor (20,21;20') is disposed in the vicinity of the axis (0).

3. An apparatus according to Claim 1 or 2, **characterised by** the feature:
- the at least one feed conveyor (10) forms approximately a right angle with the at least one discharge conveyor (20,21;20') at the transition point.

4. An apparatus according to Claim 1,2 or 3, **characterised by** the feature:
- the at least one discharge conveyor (20,21;20') has in the vicinity of the transfer point a transverse inclination which is matched to the end (11) of the at least one feed conveyor (10).

5. An apparatus according to any one of Claims 1 to 4, **characterised by** the feature:
- the end (11) of the at least one feed conveyor (10) is in the form of a chute.

6. An apparatus according to any one of the Claims 1 to 5, **characterised by** the feature:
- the longitudinal axis of the at least one discharge conveyor (20',21') is pivoted out from the radial.

7. An apparatus according to any one of the Claims 1 to 6, **characterised by** the feature:
- the conveying path of the at least one discharge conveyor (20') is curved.

8. An apparatus according to any one of the Claims 1 to 7, **characterised by** the feature:
- a plurality of discharge conveyors (20,21;20') is provided.

9. An apparatus according to Claim 8, **characterised by** the features:
- the pick-off points (30,31,32,33) are arranged in concentric circles,
- the discharge conveyors (20,21;20') are of different length.

10. An apparatus according to Claim 8 or 9, **characterised by** the feature:
- the discharge conveyors (20,21;20') are telescopically controlled.

11. An apparatus according to Claim 8 or 9, **characterised by** the feature:
- the discharge conveyors (20,21;20') are movable in a linearly controlled manner.

12. An apparatus according to any one of Claims 8 to 11, **characterised by** the features:
- the pick-off points (30,31,32,33) are arranged at different heights,
- the discharge conveyors (20,21;20') are formed with different inclinations.

13. An apparatus according to Claim 12, **characterised by** the feature:
- the inclination of the inlet and/or discharge conveyors (10; 20,21;20') is variable in a controlled manner.

14. An apparatus according to any one of Claims 1 to 13, **characterised by** the feature:
- the inlet and/or discharge conveyors (10,11;20,21;20') are in the form of belt conveyors.

15. An apparatus according to any one of Claims 1 to 13, **characterised by** the feature:
- the inlet and/or discharge conveyors (10,11;20,21;20') are in the form of a roller conveyor

16. An apparatus according to any one of Claims 1 to 13, **characterised by** the feature:
- the inlet and/or discharge conveyors (10,11;20,21;20') are in the form of chutes.

17. An apparatus according to any one of Claims 1 to 16, **characterised by** the features:
- the at least one discharge conveyor (20,21) comprises at least one conveyor section (22),
- the conveyor section (22) is independently
- rotatable,
- raisable and lowerable,
- tiltable
- and/or.displaceable.

18. An apparatus according to Claim 17, **characterised by** the feature:
- a separate pick-off point (33) is associated with the conveyor section (22) [sic].

19. An apparatus according to any one of Claims 1 to 18, **characterised by** the feature:
- the pick-off point (30) rotate in a controlled manner about the axis (0).

20. An apparatus according to any one of Claims 1 to 19, **characterised by** the feature:
- the pick-off points (30) are disposed on an annular conveyor path (35).

21. An apparatus according to any one of Claims 1 to 19, **characterised by** the feature:
- the pick-off points are in the form of annular, optionally concentric, conveyor paths (35,36).

22. An apparatus according to any one of Claims 1 to 21, **characterised by** the feature:
- at least one tangential conveyor path (37) is provided.

23. An apparatus according to any one of Claims 1 to 22, **characterised by** the features:
- at least two sorting apparatuses (I,II) are provided,
- at least one of the pick-off points, formed by a chute, a belt conveyor (23,24) or a roller conveyor of one sorting apparatus (I,II) transfers the goods being sorted (1,2,3,4, 5,6,7) on to at least one feed conveyor (10,11) of the other sorting apparatus (II,I).

24. An apparatus according to Claim 23, **characterised by** the feature:
- the two sorting apparatuses (I,II) are disposed side by side or one above the other.

25. An apparatus according to any one of Claims 1 to 24, **characterised by** the feature:
- sensors on the feed conveyors (10,11), discharge conveyors (20,21;20') and/or pick-off points (30,31,32,33) monitor and control the conveyance of the goods being sorted (1,2,3,4,5,6,7).

## Revendications

1. Dispositif (I, II) rotatif pour le tri de colis (1, 2, 3, 4, 5, 6, 7) comprenant
- une pluralité de points de réception (30, 31, 32, 33), qui sont disposés en cercle autour d'un axe (0) central,
- un dispositif répartiteur commandé avec au moins un dispositif d'évacuation (20, 21 ; 20') orienté sensiblement radialement entre l'axe (0) et les points de réception (30, 31, 32, 33),
-- le dispositif d'évacuation (20, 21 ; 20') peut tourner de façon continue autour de l'axe (0),
- et au moins un dispositif d'alimentation (10) linéaire, qui
-- est disposé au-dessous ou au-dessus du dispositif d'évacuation (20, 21 ; 20')
-- et présente une extrémité (11) montant ou descendant vers le dispositif d'évacuation (20, 21 ; 20').

2. Dispositif selon la revendication 1, **caractérisé en ce que** :
- le point de transfert entre le dispositif d'alimentation (10, 11) et le dispositif d'évacuation (20, 21 ; 20') est situé à proximité de l'axe (0).

3. Dispositif selon la revendication 1 ou 2, **caractérisé en ce que** :
- le dispositif d'alimentation (10) forme un angle à peu près droit avec le dispositif d'évacuation (20, 21 ; 20') au point de transfert.

4. Dispositif selon la revendication 1, 2 ou 3, **caractérisé en ce que** :
- le dispositif d'évacuation (20, 21 ; 20') présente dans la zone du point de transfert une inclinaison transversale qui est adaptée à l'extrémité (11) du dispositif d'alimentation (10).

5. Dispositif selon l'une quelconque des revendications 1 à 4, **caractérisé en ce que** :
- l'extrémité (11) du dispositif d'alimentation (10) est conçue comme un toboggan.

6. Dispositif selon l'une quelconque des revendications 1 à 5, **caractérisé en ce que** :
- l'axe longitudinal du dispositif d'évacuation (20', 21') est basculé à partir de la direction radiale.

7. Dispositif selon l'une quelconque des revendications 1 à 6, **caractérisé en ce que** :
- la glissière de transport du dispositif d'évacuation (20') est incurvée.

8. Dispositif selon l'une quelconque des revendications 1 à 7, **caractérisé en ce que** :
- il est prévu une pluralité de dispositifs d'évacuation (20, 21 ; 20').

9. Dispositif selon la revendication 8, **caractérisé en ce que** :
- les points de prélèvements (30, 31, 32, 33) sont disposés dans des cercles concentriques,
- les dispositifs d'évacuation (20, 21 ; 20') sont de longueur différente.

10. Dispositif selon la revendication 8 ou 9, **caractérisé en ce que** :
- les dispositifs d'évacuation (20, 21 ; 20') sont télescopiques de façon contrôlée.

11. Dispositif selon la revendication 8 ou 9, **caractérisé en ce que** :
- les dispositifs d'évacuation (20, 21 ; 20') peuvent être déplacés linéairement de façon contrôlée.

12. Dispositif selon l'une quelconque des revendications 8 à 11, **caractérisé en ce que** :
- les points de prélèvement (30, 31, 32, 33) sont disposés à différentes hauteurs,
- les dispositifs d'évacuation (20, 21 ; 20') sont réalisés avec différentes pentes.

13. Dispositif selon la revendication 12, **caractérisé en ce que** :
- la pente des dispositifs d'alimentation et/ou d'évacuation (10 ; 20, 21 ; 20') peut être modifiée de façon contrôlée.

14. Dispositif selon l'une quelconque des revendications 1 à 13, **caractérisé en ce que** :
- les dispositifs d'alimentation et/ou d'évacuation (10, 11 ; 20, 21 ; 20') sont réalisés sous la forme de transporteurs à bande.

15. Dispositif selon l'une quelconque des revendications 1 à 13, **caractérisé en ce que** :
- les dispositifs d'alimentation et/ou d'évacuation (10, 11 ; 20, 21 ; 20') sont réalisés sous la forme de transporteur à rouleaux.

16. Dispositif selon l'une quelconque des revendications 1 à 13, **caractérisé en ce que** :
- les dispositifs d'alimentation et/ou d'évacuation (10, 11 ; 20, 21 ; 20') sont réalisés sous la forme de toboggans.

17. Dispositif selon l'une quelconque des revendications 1 à 16, **caractérisé en ce que** :
- le dispositif d'évacuation (20, 21) contient au moins un convoyeur partiel (22),
- le convoyeur partiel (22) peut
-- tourner,
-- se lever et s'abaisser
-- basculer
-- et/ou coulisser de façon autonome.

18. Dispositif selon la revendication 17, **caractérisé en ce que** :
- un point de prélèvement (33) propre est attribué au convoyeur partiel (22).

19. Dispositif selon l'une quelconque des revendications 1 à 18, **caractérisé en ce que** :
- les points de prélèvement tournent (30) de façon contrôlée autour de l'axe (0).

20. Dispositif selon l'une quelconque des revendications 1 à 19, **caractérisé en ce que** :
- les points de prélèvement (30) se trouvent sur une voie de transport (35) de forme annulaire.

21. Dispositif selon l'une quelconque des revendications 1 à 19, **caractérisé en ce que** :
- les points de prélèvement sont réalisés sous la forme de voies de transport (35, 36) annulaires, éventuellement concentriques.

22. Dispositif selon l'une quelconque des revendications 1 à 21, **caractérisé en ce que** :
- il est prévu au moins une voie de transport (37) tangentielle.

23. Dispositif selon l'une quelconque des revendications 1 à 22, **caractérisé en ce que** :
- il est prévu au moins deux dispositifs de tri (I, II),
- au moins un des points de prélèvement, formé par un toboggan, un convoyeur à bande (23, 24) ou un convoyeur à rouleaux du dispositif de tri (I, II) transmet les colis à trier (1, 2, 3, 4, 5, 6, 7) à au moins un dispositif d'alimentation (10, 11) de l'autre dispositif de tri (II, I).

24. Dispositif selon la revendication 23, **caractérisé en ce que** :
- les deux dispositifs de tri (I, II) se trouvent l'un à côté de l'autre ou l'un au-dessus de l'autre.

25. Dispositif selon l'une quelconque des revendications 1 à 24, **caractérisé en ce que** :
- des capteurs placés sur les dispositifs d'alimentation (10, 11), les dispositifs d'évacuation (20, 21 ; 20') et/ou les points de prélèvement (30, 31, 32, 33) contrôlent et commandent le transport des colis à trier (1, 2, 3, 4, 5, 6, 7).
